# FASCICULE DE BREVET EUROPEEN

(11) **EP 0 833 168 B1**
(45) Date de publication et mention de la délivrance du brevet: **13.11.2002**
(21) Numéro de dépôt: 97402092.7
(22) Date de dépôt: 09.09.1997
(51) Int. Cl.: G01S 3/784

(54) **Détecteur photosensible et mosaique de détecteurs photosensibles pour la détection d'éclats lumineux et applications**
Photodetektor und Matrix von Photodetektoren zur Detektion von Lichtblitzen und Verwendungen
Photodetector and array of photodetectors for the detection of light flashes and applications

(30) Priorité: 25.09.1996 FR 9611656
(43) Date de publication de la demande: 01.04.1998
(73) Titulaire: AEROSPATIALE MATRA, 75016 Paris (FR)
(72) Inventeur: Merle, Jean-Pierre, 91400 Orsay (FR); Solenne, Thierry, 91440 Bures sur Yvette (FR); Ni, Yang, 91940 Les Ulis (FR); Devos, Francis, 91620 La Ville Du Bois (FR)
(74) Mandataire: Bonnetat, Christian

(56) Documents cités:
- EP-A- 0 499 319
- EP-A- 0 633 457
- WO-A-86/07162
- US-A- 3 736 061
- TIEZTE U.: 'Halbleiter-Shaltungstechnik', SPRINGER VERLAG

## Description

La présente invention concerne un détecteur photosensible pour la détection d'éclats lumineux, et une mosaïque de détecteurs photosensibles comportant une pluralité de tels détecteurs photosensibles, ainsi que plusieurs applications de ladite mosaïque de détecteurs photosensibles.

Une application particulièrement intéressante d'une mosaïque de détecteurs photosensibles concerne un dispositif de détection, et éventuellement de localisation, d'une source lumineuse émettant des éclats lumineux déterminés.

L'inconvénient majeur, lors de la mise en oeuvre d'un tel dispositif, réside dans la présence, en plus des éclats lumineux émis par la source lumineuse que l'on souhaite détecter, de forts éclairements notamment solaires et d'éclairs qui forment un bruit de fond lumineux, rendant souvent très difficile la détection desdits éclats lumineux recherchés.

Il peut même arriver que le bruit de fond lumineux soit tellement important qu'il couvre presque entièrement le signal lumineux que l'on souhaite détecter.

On remarquera que le document FR-A-2 583 523, qui divulgue un système comportant des détecteurs photosensibles agencés en lignes et colonnes sous forme de matrice, pour la localisation d'un mobile émettant des éclats lumineux, prévoit, pour remédier à cet inconvénient, d'associer audit système un dispositif de comparaison. Ce dispositif de comparaison permet d'enregistrer le bruit de fond, soit juste avant, soit juste après la détection, et de soustraire ce bruit de fond enregistré au signal détecté contenant les éclats lumineux recherchés.

Toutefois, la fréquence de détection est réduite pour ce système. En effet, chaque durée de détection exige une durée identique pour l'enregistrement du bruit de fond devant être soustrait et le temps de soustraction est long, car cette soustraction n'est pas intégrée à la détection et elle n'est effectuée qu'après la lecture des images.

Par ailleurs, par le document US-3 736 061, on connaît un dispositif de détection comportant une matrice de détecteurs photosensibles, dont chacun comporte une diode photosensible et un circuit électronique de traitement des signaux engendrés par ladite diode. Ce circuit électronique comporte, notamment, un filtre RC pour produire un signal d'amplitude proportionnelle à la pente d'une impulsion détectée de manière à renforcer les signaux électriques présentant un temps de montée rapide.

La présente invention a pour objet de remédier aux inconvénients précités. Elle concerne un détecteur photosensible permettant de détecter des éclats lumineux, quelle que soit l'intensité du bruit de fond, c'est-à-dire même pour un bruit de fond très important.

A cette fin, selon l'invention, ledit détecteur photosensible pour la détection d'éclats lumineux, comportant une diode photosensible susceptible de transformer l'énergie lumineuse reçue en un signal électrique et un moyen de traitement des signaux électriques engendrés par ladite diode photosensible, qui :
- d'une part, renforce les signaux électriques présentant un temps de montée rapide et correspondant à un éclat lumineux recherché reçu par la diode photosensible ; et
- d'autre part, atténue les signaux électriques correspondant à des illuminations plus lentement variables en intensité, de ladite diode photosensible,
est remarquable en ce que ladite diode photosensible est reliée, d'une part, à une tension positive et, d'autre part, à la masse par l'intermédiaire d'une résistance R1, et en ce que ledit moyen de traitement est relié directement à ladite diode photosensible et comprend un circuit électrique dérivateur qui comporte :
- un amplificateur différentiel, dont l'entrée non inverseuse est reliée à un point de connexion situé entre la diode photosensible et la résistance R1 et dont l'entrée inverseuse est reliée, d'une part, à la masse par l'intermédiaire d'une capacité et, d'autre part, audit point de connexion par l'intermédiaire d'une résistance ; et
- une résistance reliée, d'une part, à un point de connexion entre la capacité et ladite entrée inverseuse et, d'autre part, à la sortie de l'amplificateur différentiel.

Ainsi, grâce à l'invention, on est en mesure de bien mettre en évidence un éclat lumineux bref, par rapport au bruit de fond lumineux, ce qui permet de détecter, de façon précise, des éclats lumineux d'intensité réduite par rapport audit bruit de fond.

La présente invention est, de ce fait, particulièrement bien appropriée à la détection d'impulsions lumineuses de faible intensité, émises par une source lumineuse, notamment une source laser, qui peut être située à grande distance.

On remarquera que la présente invention, en réalisant une dérivation du signal électrique engendré, va à l'encontre de la pratique usuelle qui consiste à intégrer les signaux à faible énergie, lors de leur traitement, et non à les dériver.

De façon avantageuse, ledit moyen de traitement de signaux électriques est un circuit électrique à amplificateur différentiel.

Dans le cas où ledit détecteur photosensible est destiné à la détection d'éclats lumineux situés dans une bande de fréquences déterminée, avantageusement, la sensibilité photoélectrique de ladite diode photosensible est optimisée sur ladite bande de fréquences.

Par ailleurs, le détecteur photosensible conforme à l'invention comporte de plus :
- un moyen de binarisation permettant de déterminer un état binaire dudit détecteur photosensible, en fonction du signal formé par ledit moyen de traitement de signaux électriques, à savoir par exemple l'état 1 lorsqu'un éclat lumineux est détecté et l'état 0 sinon ; et
- un moyen de mémorisation permettant d'enregistrer ledit état binaire déterminé.

La présente invention concerne également une mosaïque de détecteurs photosensibles qui est remarquable en ce qu'elle comporte des détecteurs photosensibles, conformes à l'invention et agencés en lignes et colonnes sous forme de matrice.

De façon avantageuse, ladite mosaïque de détecteurs photosensibles comporte un système de surveillance permettant de détecter une variation d'éclairement caractéristique, qui est supérieure à une variation prédéfinie, d'au moins un desdits détecteurs photosensibles.

Dans un premier mode de réalisation avantageux, ledit système de surveillance surveille le courant électrique consommé par chacun desdits détecteurs photosensibles, toute augmentation dudit courant électrique consommé, qui est supérieure à une augmentation prédéfinie, indiquant une variation d'éclairement caractéristique.

En outre, dans un second mode de réalisation avantageux, ledit système de surveillance surveille l'état binaire desdits détecteurs photosensibles de sorte que tout changement de l'état binaire vers un état représentant la détection d'un éclat lumineux (à savoir de l'état 0 vers l'état 1) indique une variation d'éclairement caractéristique.

A cet effet, selon l'invention, ledit système de surveillance comporte avantageusement un premier réseau de registres à décalage, susceptible de transmettre l'état binaire de tous les détecteurs photosensibles de la mosaïque de détecteurs photosensibles.

Dans un mode de réalisation particulièrement avantageux de l'invention, ladite mosaïque de détecteurs photosensibles est formée de manière à pouvoir identifier une source lumineuse émettant des éclats lumineux à intervalles de temps prédéfinis. Dans ce cas, de façon avantageuse, ladite mosaïque de détecteurs photosensibles comporte un système d'identification qui :
- mesure l'intervalle de temps entre deux variations d'éclairement caractéristiques successives détectées ;
- compare l'intervalle de temps ainsi mesuré audit intervalle de temps prédéfini d'émission de la source lumineuse ; et
- identifie le cas échéant, en fonction de cette comparaison, ladite source lumineuse.

Par ailleurs, ladite mosaïque de détecteurs photosensibles conforme à l'invention comporte également, de façon avantageuse, un système de localisation permettant de localiser sur la matrice de la mosaïque de détecteurs photosensibles la position de chaque détecteur photosensible qui détecte un éclat lumineux.

De préférence, ledit système de localisation comporte :
- un second réseau de registres à décalage, pouvant être commun avec le système de surveillance, permettant de transmettre en série selon un ordre prédéfini l'état binaire de tous les détecteurs photosensibles, l'ordre de chaque détecteur photosensible dans la série de transmission étant représentatif de sa position sur la matrice ; et/ou
- un moyen de calcul permettant de déterminer une position centrale à partir des positions localisées de tous les détecteurs photosensibles ayant détecté un éclat lumineux.

Dans une mise en oeuvre particulièrement avantageuse de l'invention, ledit système de localisation :
- détermine l'intensité du signal engendré par le moyen de traitement de chacun des détecteurs photosensibles ayant détecté un éclat lumineux ;
- détermine, sur la matrice de la mosaïque de détecteurs photosensibles, la position de chacun desdits détecteurs photosensibles ayant détecté un éclat lumineux ; et
- calcule, à partir des intensités et des positions ainsi déterminées, le barycentre correspondant qui représente la localisation recherchée.

Par ailleurs, la présente invention concerne différentes applications pratiques utilisant une mosaïque de détecteurs photosensibles telle que celle décrite précédemment.

Une première application concerne un dispositif de détection d'éclats lumineux qui comporte un ensemble de détection formé d'une mosaïque de détecteurs photosensibles conforme à l'invention et d'un moyen de focalisation qui focalise tous les rayonnements lumineux situés dans son champ de vision sur ladite mosaïque de détecteurs photosensibles.

Dans une variante de ladite première application, ledit dispositif de détection comporte avantageusement une pluralité d'ensembles de détection, de préférence six ensembles de détection, qui sont agencés côte à côte en un cercle, de sorte que la réunion de leurs champs de vision permet une détection d'éclats lumineux, horizontalement dans toutes les directions.

Une seconde application avantageuse concerne un autodirecteur d'un corps volant, qui est destiné à guider ledit corps volant vers une source lumineuse et qui comporte notamment :
- un système de localisation de source lumineuse ;
- une source d'informations inertielles ; et
- une unité de traitement d'informations.

Selon l'invention, ledit autodirecteur est remarquable en ce que ledit système de localisation de source lumineuse comporte une mosaïque de détecteurs photosensibles conforme à l'invention, qui est agencée à poste fixe sur ledit corps volant, pour localiser une source lumineuse émettant des éclats lumineux.

Les figures du dessin annexé feront bien comprendre comment l'invention peut être réalisée. Sur ces figures, des références identiques désignent des éléments semblables.

La figure 1 illustre schématiquement un détecteur photosensible conforme à l'invention.

La figure 2 illustre le traitement d'un signal électrique par un moyen de traitement d'un détecteur photosensible conforme à l'invention.

La figure 3 illustre schématiquement une mosaïque de détecteurs photosensibles conforme à l'invention.

La figure 4 montre un dispositif de détection et de localisation d'une source d'éclats lumineux.

La figure 5 illustre les opérations réalisées en fonction du temps lors de la mise en oeuvre du dispositif de la figure 4.

La figure 6 montre schématiquement en vue de dessus un dispositif permettant de détecter et de localiser des éclats lumineux uniques, horizontalement dans toutes les directions.

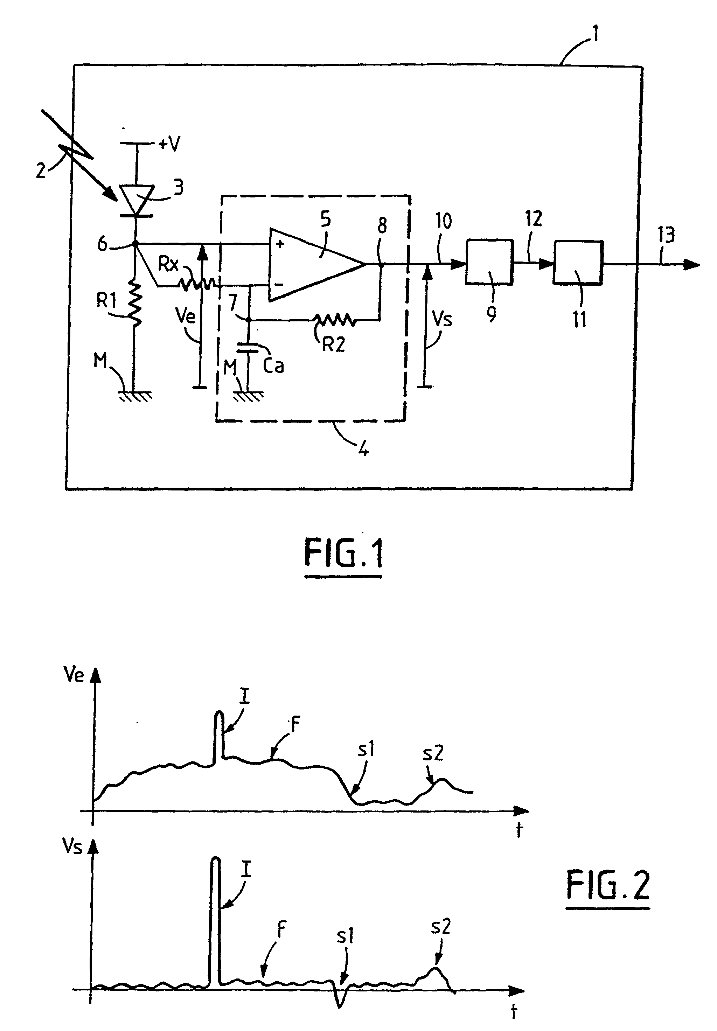

Le détecteur photosensible 1 conforme à l'invention et représenté schématiquement sur la figure 1 est destiné à détecter des éclats lumineux 2, émis par exemple par une source laser.

A cet effet, ledit détecteur photosensible 1 comporte selon l'invention :
- une diode photosensible 3 qui est reliée, d'une part, à une tension positive +V et, d'autre part, à la masse M par l'intermédiaire d'une résistance R1, et qui est susceptible de transformer l'énergie lumineuse reçue en un signal électrique ; et
- un moyen 4 de traitement des signaux électriques engendrés par la diode photosensible 3.

Ledit moyen 4 est réalisé sous forme d'un circuit électrique dérivateur, de type connu, comportant :
- un amplificateur différentiel 5, dont l'entrée non inverseuse (+) est reliée à un point de connexion 6 situé entre la diode photosensible 3 et la résistance R1 et dont l'entrée inverseuse (-) est reliée, d'une part, à la masse M par l'intermédiaire d'une capacité Ca et, d'autre part, au point de connexion 6 par une résistance Rx ; et
- une résistance R2 reliée, d'une part, à un point de connexion 7 entre la capacité Ca et l'entrée inverseuse (-) et, d'autre part, à la sortie 8 de l'amplificateur différentiel 5.

Lors de l'illumination de la diode photosensible 3, ledit moyen de traitement 4 transforme le signal électrique engendré par ladite diode photosensible 3 et représenté sous forme d'une tension Ve sur les figures 1 et 2, en un signal traité et représenté sous forme d'une tension Vs. Comme on peut le voir sur la figure 2, en comparant les schémas illustrant respectivement les variations desdites tensions Ve et Vs, en fonction du temps t, le traitement du moyen de traitement 4 est tel que :
- d'une part, il renforce les signaux électriques I présentant un temps de montée rapide et correspondant à un éclat lumineux 2 détecté par la diode photosensible 3. Il met également en évidence les variations s1 et s2 relativement brusques du bruit de fond lumineux F ; et
- d'autre part, il atténue les signaux électriques présentant une variation temporelle plus lente et correspondant à des illuminations plus lentement variables en intensité, c'est-à-dire essentiellement le bruit de fond lumineux F.

Ainsi, grâce à l'invention, on est en mesure de mettre en évidence des impulsions brèves dans le bruit de fond lumineux F, ce qui permet de détecter, de façon précise, des éclats lumineux 2 d'intensité réduite par rapport audit bruit de fond lumineux F. Le détecteur photosensible 1 permet ainsi, notamment, de détecter des impulsions à faible intensité, émises par une source laser située à grande distance dudit détecteur photosensible 1.

Selon l'invention, ledit détecteur photosensible 1 comporte de plus, tel que représenté schématiquement sur la figure 1 :
- un moyen de binarisation 9 qui est relié par une liaison 10 à la sortie 8 de l'amplificateur différentiel 5 et qui compare ladite tension Vs à la sortie 8 à une tension de référence Vo et attribue, en fonction du résultat, un état binaire 0 (si Vs est inférieure à Vo) ou 1 (si Vs est supérieure à Vo) audit détecteur photosensible 1 ; et
- un moyen de mémorisation 11 qui est relié au moyen de binarisation 9 par une liaison 12, qui enregistre l'état binaire déterminé par ce dernier et qui peut transmettre cette information par l'intermédiaire d'une liaison 13.

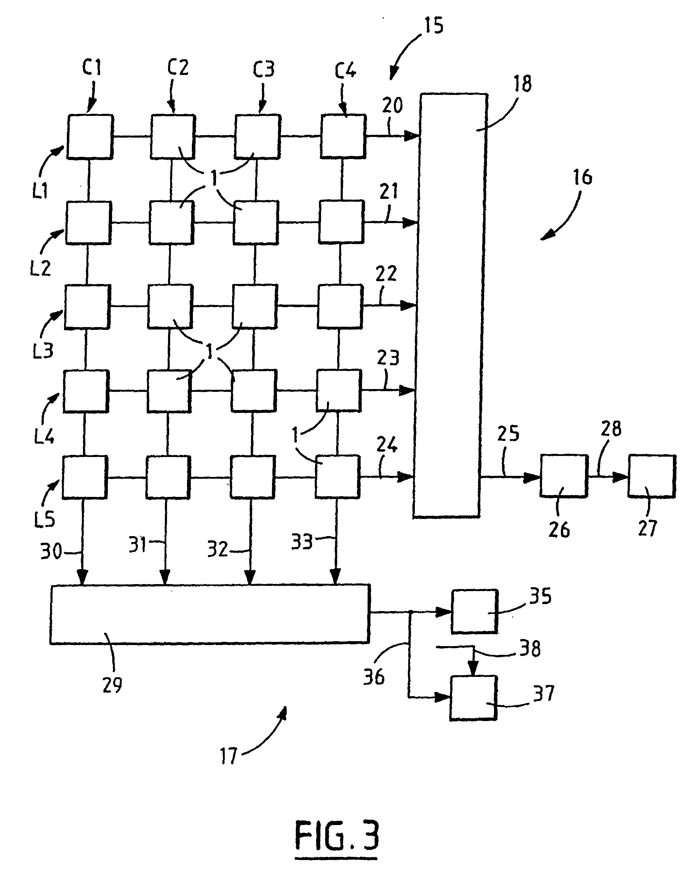

La présente invention concerne également une mosaïque de détecteurs photosensibles 15, tel que représenté sur la figure 3, comportant des détecteurs photosensibles 1 agencés sous forme de matrice.

Lesdits détecteurs photosensibles 1 sont reliés entre eux en lignes L1, L2, L3, L4, L5 et en colonnes C1, C2, C3, C4.

Selon l'invention, ladite mosaïque de détecteurs photosensibles 15 comporte, de plus :
- un système de surveillance 16 explicité ci-dessous, permettant de repérer temporellement les éclats lumineux 2 arrivant sur ladite matrice de détecteurs photosensibles 1 ; et
- un système de localisation 17 également explicité ci-dessous, permettant de localiser sur ladite matrice la position des détecteurs photosensibles 1 qui détectent des éclats lumineux 2 de manière à pouvoir évaluer la direction de la source émettant lesdits éclats lumineux 2.

Selon l'invention, ledit système de surveillance 16 détecte toute variation d'éclairement d'un desdits détecteurs photosensibles 1, qui est supérieure à une valeur prédéfinie et qui est caractéristique de l'illumination dudit détecteur photosensible 1 par un éclat lumineux 2.

Dans le mode de réalisation représenté sur la figure 3, ledit système de surveillance 16 surveille l'état binaire de tous les détecteurs photosensibles 1, de sorte que tout changement d'état, de l'état 0 vers l'état 1, est considéré comme une variation d'éclairement caractéristique, c'est-à-dire est représentatif de la détection d'un éclat lumineux 2.

Pour ce faire, ledit système de surveillance 16 comporte :
- un réseau 18 de registres à décalage, reliés respectivement aux lignes L1, L2, L3, L4 et L5 par des liaisons 20 à 24, ledit réseau 18 permettant de communiquer, par une liaison 25, ligne par ligne, l'état binaire de chacun des détecteurs photosensibles 1 ; et
- un moyen 26 d'évaluation et d'extraction de l'état binaire des détecteurs photosensibles 1, relié à la liaison 25 et permettant d'extraire les états 1 représentatifs d'une détection d'éclats lumineux 2.

Dans un autre mode de réalisation non représenté, le système de surveillance est formé de manière à surveiller le courant électrique consommé par l'ensemble desdits détecteurs photosensibles 1, toute augmentation dudit courant électrique consommé, qui est supérieure à une augmentation prédéfinie, indiquant alors une variation d'éclairement caractéristique d'au moins l'un desdits détecteurs photosensibles.

Ladite mosaïque de détecteurs photosensibles 15 comporte, de plus, un système d'identification 27 associé au système de surveillance 16 et relié par une liaison 28 au moyen 26, pour identifier une source lumineuse qui émet des éclats lumineux 2 à intervalles de temps T constants et prédéfinis.

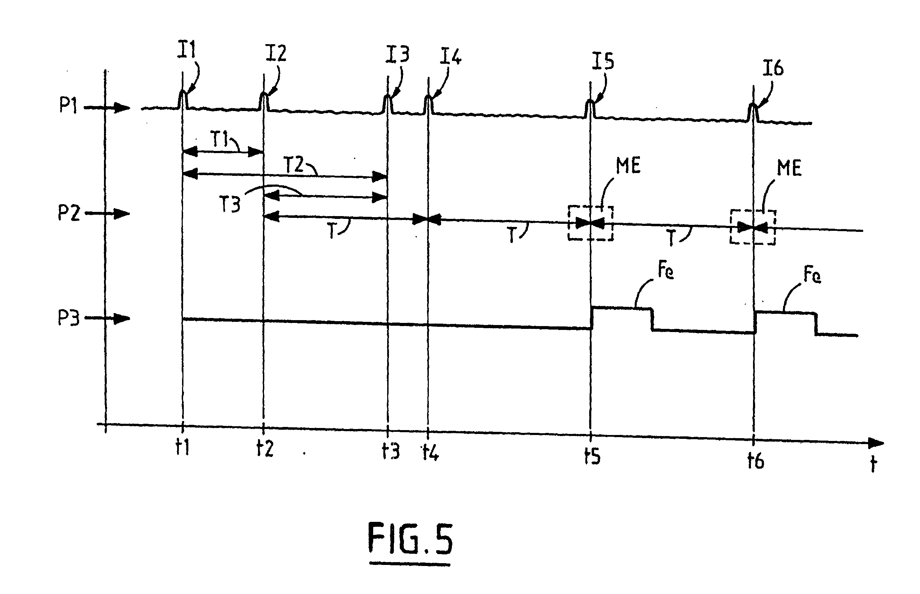

A cet effet, ledit système d'identification 27 :
- enregistre et date toute variation d'éclairement caractéristique ;
- mesure l'intervalle de temps entre deux variations d'éclairement caractéristiques successives ou non détectées ;
- compare l'intervalle de temps ainsi mesuré audit intervalle de temps T prédéfini d'émission d'éclats lumineux par la source lumineuse à identifier ; et
- identifie ou non la source lumineuse en fonction de cette comparaison, comme on le verra plus en détail ci-dessous en référence à la figure 5.

Par ailleurs, le système de localisation 17 comporte, selon l'invention, un réseau 29 de registres à décalage reliés respectivement aux colonnes C1, C2, C3 et C4 de la matrice de la mosaïque de détecteurs photosensibles 15 par des liaisons 30 à 33, ledit réseau 29 permettant de transmettre en série, selon un ordre prédéfini, l'état binaire de tous les détecteurs photosensibles 1, l'ordre de chaque détecteur photosensible 1 dans la série de transmission étant représentatif de sa position sur ladite matrice.

Ainsi, on est en mesure de localiser la position de tout détecteur photosensible présentant un état 1.

Bien entendu, il est possible qu'un seul éclat lumineux 2 de diamètre important mette plusieurs détecteurs photosensibles 1 dans leur état 1. Aussi, pour pouvoir réaliser dans un tel cas une localisation précise, le système de localisation 17 comporte de plus, selon l'invention, un moyen de calcul 35 relié par une liaison 36 au réseau 29 et déterminant une position centrale à partir des positions localisées de tous les détecteurs photosensibles 1 qui ont détecté un éclat lumineux 2.

Par ailleurs, dans un mode de réalisation particulièrement avantageux, le système de localisation 17 comporte, de plus, un moyen de calcul 37 :
- qui reçoit :
   . par la liaison 36 dédoublée, la position de tous les détecteurs photosensibles 1 ayant détecté un éclat lumineux 2 ; et
   . par une liaison 38, l'intensité du signal Vs engendré par le moyen de traitement 4 de chacun desdits détecteurs photosensibles 1 ayant détecté un éclat lumineux 2 ; et
- qui calcule, à partir des intensités et des positions ainsi reçues, le barycentre correspondant qui représente la localisation recherchée.

La mosaïque de détecteurs photosensibles 15 représentée sur la figure 3 et précisée ci-dessus peut être utilisée dans de nombreux dispositifs optoélectroniques, en particulier des dispositifs de surveillance et de localisation de sources lumineuses. A titre d'exemple, on décrit ci-après quelques applications possibles de cette mosaïque de détecteurs photosensibles 15.

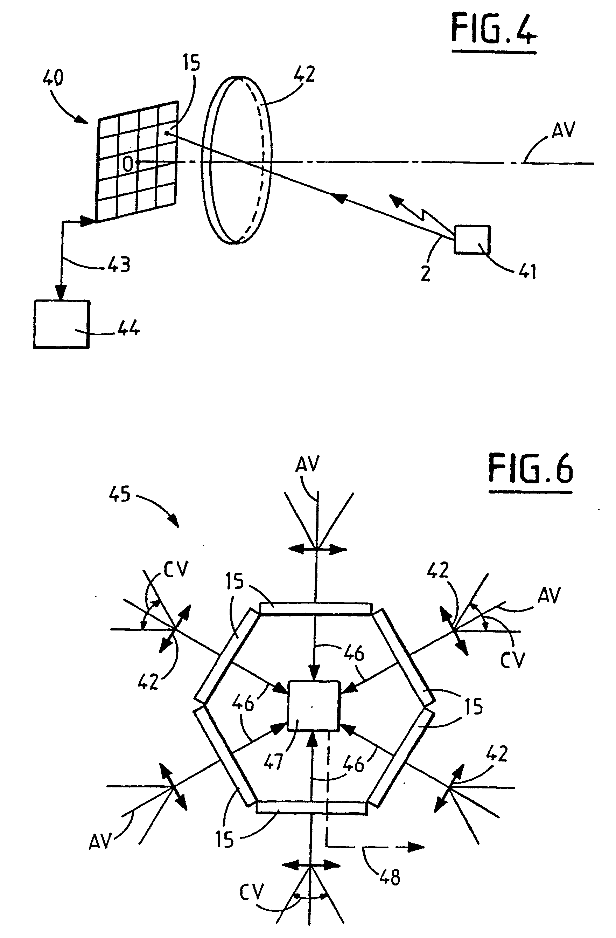

Une première application possible concerne un dispositif d'identification et de localisation 40 d'une source lumineuse impulsionnelle 41 par exemple mobile, tel que représenté sur la figure 4, qui permet de déterminer, par rapport à un axe de visée AV, la position angulaire de ladite source lumineuse 41.

Ledit dispositif 40 comporte à cet effet un moyen de focalisation 42, observant l'environnement de l'axe de visée AV, dans lequel se trouve la source 41, et une mosaïque de détecteurs photosensibles 15, à laquelle est associée par une liaison 43 une unité de contrôle 44 qui commande notamment les éléments 16 et 17 précités de ladite mosaïque de détecteurs photosensibles 15, qui comprend le cas échéant certains de ces éléments, et qui reçoit et traite les résultats engendrés par ces derniers.

Ledit dispositif 40 est particulièrement bien approprié à l'identification et à la localisation d'une source lumineuse 41 émettant des éclats lumineux 2 à intervalles de temps T prédéfinis.

La figure 5 est un schéma illustrant, en fonction du temps t, les différentes étapes d'un tel processus d'identification et de localisation d'une source lumineuse 41, au moyen du dispositif 40 (en présence d'éclats lumineux parasites).

De préférence, lors de la détection, le système de surveillance 16 de la mosaïque de détecteurs photosensibles 15 est en veille et le système de localisation 17 est hors service (la direction d'origine des éclats lumineux n'étant a priori pas connue).

Sur une ligne P1 de la figure 5, on a représenté les différentes illuminations I1 à I6 détectées en fonction du temps t respectivement à des instants t1 à t6, par la mosaïque de détecteurs photosensibles 15 et correspondant à des éclats lumineux 2 reçus, soit de la source lumineuse 41 recherchée, soit de sources lumineuses parasites non représentées.

Sur une ligne P2, on a illustré l'identification, au moyen du système de surveillance 16, parmi toutes les illuminations I1 à I6 détectées, de celles qui proviennent de la source lumineuse 41, c'est-à-dire celles qui sont séparées d'un temps T. Comme, d'une part, les durées T1 entre t1 et t2 et T3 entre t2 et t3 sont inférieures à T, et comme, d'autre part, la durée T2 entre t1 et t3 est supérieure à T, les couples I1/I2, I1/I3 et I2/I3 ne correspondent pas à deux illuminations successives issues de la source 41.

En revanche, la durée entre les instants t2 et t4 est égale à T, en tenant bien entendu compte des marges d'erreurs possibles. En ayant ainsi identifié un couple d'illuminations I2 et I4 issues de la source 41, on peut prévoir les instants t5, t6, ... des prochaines illuminations I5, I6, ... émises par ladite source 41, à des durées T, 2T, ... après t4, à une marge d'erreurs ME près.

On peut alors activer le système de localisation 17, pendant des fenêtres temporelles Fe, auxdits instants t5, t6, ..., tel qu'illustré sur une ligne P3, pour que ce dernier localise la direction de la cible 41, de la manière décrite précédemment.

Dans un mode de réalisation particulièrement avantageux de l'invention, non représenté, le dispositif 40 peut être intégré dans un autodirecteur d'un corps volant. Dans ce cas, la mosaïque de détecteurs photosensibles 15 est agencée à poste fixe sur le corps volant et observe l'espace vers l'avant du corps volant, par exemple un missile. Ledit dispositif 40 est alors utilisé pour localiser une cible à atteindre ou à détruire, qui est illuminée par un faisceau lumineux, de préférence un faisceau laser, émis à intervalles de temps réguliers, et qui réfléchit vers le corps volant ledit faisceau lumineux.

Sur la figure 6, on a représenté en vue schématique de dessus une autre application de la mosaïque de détecteurs photosensibles 15, correspondant à un dispositif 45 permettant une détection d'éclats lumineux 2, horizontalement dans toutes les directions.

Ledit dispositif 45 comporte une pluralité d'ensembles de détection :
- qui sont formés d'une mosaïque de détecteurs photosensibles 15 et d'un moyen de focalisation 42 ;
- qui présentent chacun un champ de vision CV centré sur l'axe de visée AV correspondant, dans lequel peuvent être réalisées les détections ;
- qui sont agencés côte à côte, en un cercle de sorte que la réunion de leurs champs de vision CV permet une détection d'éclats lumineux 2, horizontalement dans toutes les directions ; et
- qui sont reliés respectivement par des liaisons 46 à une unité de contrôle 47 qui commande la détection et est susceptible de transmettre les résultats par une liaison 48.

Dans l'exemple préférentiel représenté sur la figure 6, ledit dispositif 45 comporte six ensembles de détection 15, 42 agencés sous forme d'hexagone.

## Revendications

1. Détecteur photosensible (1) pour la détection d'éclats lumineux (2), comportant une diode photosensible (3) susceptible de transformer l'énergie lumineuse reçue en un signal électrique et un moyen (4) de traitement des signaux électriques engendrés par ladite diode photosensible (3), qui :
- d'une part, renforce les signaux électriques présentant un temps de montée rapide et correspondant à un éclat lumineux (2) recherché reçu par la diode photosensible (3) ; et
- d'autre part, atténue les signaux électriques correspondant à des illuminations plus lentement variables en intensité, de ladite diode photosensible (3),
**caractérisé en ce que** ladite diode photosensible (3) est reliée, d'une part, à une tension positive et, d'autre part, à la masse (M) par l'intermédiaire d'une résistance R1, et **en ce que** ledit moyen de traitement (4) est relié directement à ladite diode photosensible (3) et comprend un circuit électrique dérivateur qui comporte :
- un amplificateur différentiel (5), dont l'entrée non inverseuse est reliée à un point de connexion (6) situé entre la diode photosensible (3) et la résistance R1 et dont l'entrée inverseuse est reliée, d'une part, à la masse (M) par l'intermédiaire d'une capacité (Ca) et, d'autre part, audit point de connexion (6) par l'intermédiaire d'une résistance (Rx) ; et
- une résistance (R2) reliée, d'une part, à un point de connexion (7) entre la capacité (Ca) et ladite entrée inverseuse et, d'autre part, à la sortie (8) de l'amplificateur différentiel (5).

2. Détecteur photosensible selon la revendication 1, pour la détection d'éclats lumineux (2) situés dans une bande de fréquences déterminée,
**caractérisé en ce que** la sensibilité photoélectrique de ladite diode photosensible (3) est optimisée sur ladite bande de fréquences.

3. Détecteur photosensible selon l'une quelconque des revendications 1 ou 2,
**caractérisé en ce qu'**il comporte un moyen de binarisation (9) permettant de déterminer un état binaire dudit détecteur photosensible (1), en fonction du signal formé par ledit moyen (4) de traitement de signaux électriques.

4. Détecteur photosensible selon la revendication 3,
**caractérisé en ce qu'**il comporte un moyen de mémorisation (11) permettant d'enregistrer ledit état binaire déterminé.

5. Mosaïque de détecteurs photosensibles,
**caractérisée en ce qu'**elle comporte une pluralité de détecteurs photosensibles (1) tels que ceux spécifiés sous l'une quelconque des revendications 1 à 4, qui sont agencés en lignes (L1 à L5) et colonnes (C1 à C4) sous forme de matrice.

6. Mosaïque de détecteurs photosensibles selon la revendication 5,
**caractérisée en ce qu'**elle comporte un système de surveillance (16) permettant de détecter une variation d'éclairement caractéristique, qui est supérieure à une variation prédéfinie, d'au moins un desdits détecteurs photosensibles (1).

7. Mosaïque de détecteurs photosensibles selon la revendication 6,
**caractérisée en ce que** ledit système de surveillance surveille le courant électrique consommé par chacun desdits détecteurs photosensibles (1), toute augmentation dudit courant électrique consommé, qui est supérieure à une augmentation prédéfinie, indiquant une variation d'éclairement caractéristique.

8. Mosaïque de détecteurs photosensibles selon la revendication 6, comportant des détecteurs photosensibles spécifiés sous l'une des revendications 3 ou 4,
**caractérisée en ce que** ledit système de surveillance (16) surveille l'état binaire desdits détecteurs photosensibles (1), tout changement de l'état binaire vers un état représentatif de la détection d'un éclat lumineux (2) indiquant une variation d'éclairement caractéristique.

9. Mosaïque de détecteurs photosensibles selon la revendication 8,
**caractérisée en ce que** ledit système de surveillance (16) comporte un premier réseau (18) de registres à décalage, susceptible de transmettre l'état binaire de tous les détecteurs photosensibles (1) de ladite mosaïque de détecteurs photosensibles (15).

10. Mosaïque de détecteurs photosensibles selon l'une quelconque des revendications 6 à 9, pour identifier une source lumineuse (41) émettant des éclats lumineux (2) à intervalles de temps constants et prédéfinis (T),
**caractérisée en ce qu'**elle comporte un système d'identification (27) qui :
- mesure l'intervalle de temps entre deux variations d'éclairement caractéristiques successives détectées ;
- compare l'intervalle de temps ainsi mesuré audit intervalle de temps prédéfini (T) d'émission de ladite source lumineuse (41) ; et
- identifie le cas échéant, en fonction de cette comparaison, ladite source lumineuse (41).

11. Mosaïque de détecteurs photosensibles selon l'une quelconque des revendications 5 à 10,
**caractérisée en ce qu'**elle comporte un système de localisation (17) permettant de localiser sur la matrice de la mosaïque de détecteurs photosensibles (15) la position de chaque détecteur photosensible (1) qui détecte un éclat lumineux (2).

12. Mosaïque de détecteurs photosensibles selon la revendication 11,
**caractérisée en ce que** ledit système de localisation (17) comporte un second réseau (29) de registres à décalage, permettant de transmettre en série selon un ordre prédéfini, l'état binaire de tous les détecteurs photosensibles (1), l'ordre de chaque détecteur photosensible (1) dans la série de transmission étant représentatif de sa position sur la matrice.

13. Mosaïque de détecteurs photosensibles selon l'une des revendications 11 ou 12,
**caractérisée en ce que** ledit système de localisation (17) comporte un moyen de calcul (35) permettant de déterminer une position centrale à partir des positions localisées de tous les détecteurs photosensibles (1) ayant détecté un éclat lumineux (2).

14. Mosaïque de détecteurs photosensibles selon l'une des revendications 11 ou 12,
**caractérisée en ce que** ledit système de localisation (17, 37) :
- détermine l'intensité du signal engendré par le moyen de traitement (4) de chacun des détecteurs photosensibles (1) ayant détecté un éclat lumineux (2) ;
- détermine, sur la matrice de la mosaïque de détecteurs photosensibles (15), la position de chacun desdits détecteurs photosensibles (1) ayant détecté un éclat lumineux (2) ; et
- calcule, à partir des intensités et des positions ainsi déterminées, le barycentre correspondant qui représente la localisation recherchée.

15. Dispositif de détection d'éclats lumineux,
**caractérisé en ce qu'**il comporte un ensemble de détection (15, 42) formé d'une mosaïque de détecteurs photosensibles (15) telle que celle spécifiée sous l'une quelconque des revendications 5 à 14 et d'un moyen de focalisation (42) qui focalise tous les rayonnements lumineux situés dans son champ de vision (CV) sur ladite mosaïque de détecteurs photosensibles (15).

16. Dispositif selon la revendication 15,
**caractérisé en ce qu'**il comporte une pluralité d'ensembles de détection (15, 42) qui sont agencés côte à côte en un cercle, de sorte que la réunion de leurs champs de vision (CV) permet une détection d'éclats lumineux (2), horizontalement dans toutes les directions.

17. Dispositif selon la revendication 16,
**caractérisé en ce qu'**il comporte six ensembles de détection (15, 42) agencés sous forme d'hexagone.

18. Autodirecteur d'un corps volant, destiné à guider ledit corps volant vers une source lumineuse et comportant notamment :
- un système de localisation de source lumineuse ;
- une source d'informations inertielles ; et
- une unité de traitement d'informations,
**caractérisé en ce que** ledit système de localisation de source lumineuse comporte une mosaïque de détecteurs photosensibles (15) telle que celle spécifiée sous l'une quelconque des revendications 11 à 14 et agencée à poste fixe sur ledit corps volant, pour localiser une source lumineuse émettant des éclats lumineux (2).

## Patentansprüche

1. Lichtempfindlicher Detektor (1) zur Detektion von Blinksignalen (2), der eine lichtempfindliche Diode (3), die die empfangene Lichtenergie in ein elektrisches Signal umwandeln kann, sowie ein Mittel (4) zur Verarbeitung der von der lichtempfindlichen Diode (3) erzeugten elektrischen Signale umfasst, der
- zum einen die elektrischen Signale, die eine schnelle Anstiegszeit aufweisen und einem gesuchten, von der lichtempfindlichen Diode (3) empfangenen Blinksignal (2) entsprechen, verstärkt; und
- zum anderen die elektrischen Signale der lichtempfindlichen Diode (3), die in der Stärke langsamer veränderlichen Illuminationen entsprechen, abschwächt,
**dadurch gekennzeichnet, dass** die lichtempfindliche Diode (3) zum einen an eine positive Spannung und zum anderen über einen Widerstand R1 an die Masse (M) geschaltet ist und dadurch, dass das Verarbeitungsmittel (4) direkt mit der lichtempfindlichen Diode (3) verbunden ist und einen elektrischen Ableitungsstromkreis umfasst, der aus folgendem besteht:
- einem Differentialverstärker (5), dessen nicht umpolbarer Eingang mit einem Anschlusspunkt (6) verbunden ist, der zwischen der lichtempfindlichen Diode (3) und dem Widerstand R1 liegt, und dessen umpolbarer Eingang zum einen über ein C-Glied (Ca) mit der Masse (M) und zum anderen über einen Widerstand (Rx) mit dem Anschlusspunkt (6) verbunden ist; und
- einem Widerstand (R2), der zum einen mit einem Anschlusspunkt (7) zwischen dem C-Glied (Ca) und dem umpolbaren Eingang und zum anderen mit dem Ausgang (8) des Differentialverstärkers (5) verbunden ist.

2. Lichtempfindlicher Detektor nach Anspruch 1 zur Detektion von auf einem bestimmten Frequenzband liegenden Blinksignalen (2),
**dadurch gekennzeichnet, dass** die fotoelektrische Empfindlichkeit der lichtempfindlichen Diode (3) auf dem Frequenzband optimiert wird.

3. Lichtempfindlicher Detektor nach Anspruch 1 oder 2,
**dadurch gekennzeichnet, dass** er ein Binarisierungsmittel (9) umfasst, das die Bestimmung eines binären Zustands des lichtempfindlichen Detektors (1) in Abhängigkeit von dem vom Mittel (4) zur Verarbeitung elektrischer Signale erzeugten Signal ermöglicht.

4. Lichtempfindlicher Detektor nach Anspruch 3,
**dadurch gekennzeichnet, dass** er ein Speichermittel (11) umfasst, das die Aufzeichnung des bestimmten binären Zustands gestattet.

5. Mosaik lichtempfindlicher Detektoren,
**dadurch gekennzeichnet, dass** es mehrere lichtempfindliche Detektoren (1), wie die in einem der Ansprüche 1 bis 4 spezifizierten Detektoren, umfasst, die in Zeilen (L1 bis L5) und Spalten (C1 bis C4) in Matrizenform angeordnet sind.

6. Mosaik lichtempfindlicher Detektoren nach Anspruch 5,
**dadurch gekennzeichnet, dass** es ein Überwachungssystem (16) umfasst, das es ermöglicht, eine charakteristische Veränderung der Illumination von mindestens einem der lichtempfindlichen Detektoren (1) festzustellen, die größer als eine vorher definierte Veränderung ist.

7. Mosaik lichtempfindlicher Detektoren nach Anspruch 6,
**dadurch gekennzeichnet, dass** das Überwachungssystem den elektrischen Strom überwacht, der von jedem dieser lichtempfindlichen Detektoren (1) verbraucht wird, wobei jegliche Zunahme des elektrischen Stromverbrauchs, die über einer vorher definierten Zunahme liegt, eine charakteristische Veränderung der Illumination anzeigt.

8. Mosaik lichtempfindlicher Detektoren nach Anspruch 6, das in Anspruch 3 oder 4 spezifizierte lichtempfindliche Detektoren umfasst,
**dadurch gekennzeichnet, dass** das Überwachungssystem (16) den binären Zustand der lichtempfindlichen Detektoren (1) überwacht, wobei jegliche Änderung des binären Zustands in einen Zustand, der für die Detektion eines Blinksignals (2) repräsentativ ist, eine charakteristische Veränderung der Illumination anzeigt.

9. Mosaik lichtempfindlicher Detektoren nach Anspruch 8,
**dadurch gekennzeichnet, dass** das Überwachungssystem (16) ein erstes Netz (18) von Versatzregistem umfasst, das den binären Zustand aller lichtempfindlichen Detektoren (1) des Mosaiks lichtempfindlicher Detektoren (15) übertragen kann.

10. Mosaik lichtempfindlicher Detektoren nach einem der Ansprüche 6 bis 9 zur Erkennung einer in konstanten und vorher festgelegten Zeitabständen (T) Blinksignale (2) aussendenden Lichtquelle (41),
**dadurch gekennzeichnet, dass** es ein Erkennungssystem (27) umfasst, das
- den Zeitabstand zwischen zwei festgestellten aufeinanderfolgenden charakteristischen Illuminationsveränderungen misst;
- den so gemessenen Zeitabstand mit dem vorher festgelegten Aussendeintervall (T) der Lichtquelle (41) vergleicht; und
- gegebenenfalls in Abhängigkeit von diesem Vergleich die Lichtquelle (41) erkennt.

11. Mosaik lichtempfindlicher Detektoren nach einem der Ansprüche 5 bis 10,
**dadurch gekennzeichnet, dass** es ein Lokalisierungssystem (17) umfasst, das es ermöglicht, auf der Matrize des Mosaiks lichtempfindlicher Detektoren (15) die Position jedes lichtempfindlichen Detektors (1) zu lokalisieren, der ein Blinksignal (2) feststellt.

12. Mosaik lichtempfindlicher Detektoren nach Anspruch 11,
**dadurch gekennzeichnet, dass** das Lokalisierungssystem (17) ein zweites Netz (29) von Versatzregistem umfasst, das es ermöglicht, hintereinander in einer vorher festgelegten Reihenfolge den binären Zustand aller lichtempfindlichen Detektoren (1) zu übertragen, wobei die Reihenfolge jedes lichtempfindlichen Detektors (1) in der Übertragungsreihe repräsentativ für seine Position auf der Matrize ist.

13. Mosaik lichtempfindlicher Detektoren nach Anspruch 11 oder 12,
**dadurch gekennzeichnet, dass** das Lokalisierungssystem (17) ein Rechenmittel (35) umfasst, das es ermöglicht, ausgehend von den lokalisierten Positionen aller lichtempfindlichen Detektoren (1), die ein Blinksignal (2) festgestellt haben, eine Mittelposition zu ermitteln.

14. Mosaik lichtempfindlicher Detektoren nach Anspruch 11 oder 12,
**dadurch gekennzeichnet, dass** das Lokalisierungssystem (17, 37)
- die Stärke des Signals ermittelt, das durch das Verarbeitungsmittel (4) eines jeden lichtempfindlichen Detektors (1), der ein Blinksignal (2) festgestellt hat, erzeugt wird;
- auf der Matrize des Mosaiks lichtempfindlicher Detektoren (15) die Position eines jeden der lichtempfindlichen Detektoren (1) ermittelt, der ein Blinksignal (2) festgestellt hat; und
- ausgehend von den so ermittelten Stärken und Positionen den entsprechenden Schwerpunkt, der die gesuchte Lokalisierung darstellt, berechnet.

15. Vorrichtung zur Detektion von Blinksignalen,
**dadurch gekennzeichnet, dass** sie eine Detektionseinheit (15, 42) umfasst, die von einem Mosaik lichtempfindlicher Detektoren (15), wie es in einem der Ansprüche 5 bis 14 spezifiziert ist, und einem Fokussierungsmittel (42) gebildet wird, das alle Lichtstrahlen fokussiert, die sich in seinem Sichtfeld (CV) auf dem Mosaik lichtempfindlicher Detektoren (15) befinden.

16. Vorrichtung nach Anspruch 15,
**dadurch gekennzeichnet, dass** sie mehrere Detektionseinheiten (15, 42) umfasst, die nebeneinander so in einem Kreis angeordnet sind, dass die Verbindung ihrer Sichtfelder (CV) die Detektion von Blinksignalen (2) waagerecht in alle Richtungen ermöglicht.

17. Vorrichtung nach Anspruch 16,
**dadurch gekennzeichnet, dass** sie sechs in Form eines Sechsecks angeordnete Detektionseinheiten (15, 42) umfasst.

18. Zielsucher eines Flugkörpers, der den Flugkörper zu einer Lichtquelle lenken soll und insbesondere folgendes umfasst:
- ein Lichtquellenlokalisierungssystem;
- eine Quelle von Trägheitsinformationen; und
- eine Datenverarbeitungseinheit,
**dadurch gekennzeichnet, dass** das Lichtquellenlokalisierungssystem ein Mosaik lichtempfindlicher Detektoren (15) umfasst, wie es in einem beliebigen der Ansprüche 11 bis 14 spezifiziert ist, das fest am Flugkörper angeordnet ist, um eine Blinksignale (2) aussendende Lichtquelle zu lokalisieren.

## Claims

1. Photosensitive detector (1) for detecting luminous flashes (2), including a photosensitive diode (3) capable of transforming the luminous energy received into an electrical signal and a means (4) of processing the electrical signals generated by the said photosensitive diode (3), which:
- on the one hand, strengthens the electrical signals exhibiting a fast rise time and corresponding to a sought-after luminous flash (2) received by the photosensitive diode (3); and
- on the other hand, attenuates the electrical signals corresponding to illuminations which vary more slowly in intensity, of the said photosensitive diode (3),
**characterized in that** the said photosensitive diode (3) is linked, on the one hand, to a positive voltage and, on the other hand, to earth (M) by way of a resistor R1, and **in that** the said means of processing (4) is linked directly to the said photosensitive diode (3) and comprises a differentiator electrical circuit which includes:
- a differential amplifier (5), whose noninverting input is linked to a connection point (6) situated between the photosensitive diode (3) and the resistor R1 and whose inverting input is linked, on the one hand, to earth (M) by way of a capacitor (Ca) and, on the other hand, to the said connection point (6) by way of a resistor (Rx); and
- a resistor (R2) linked, on the one hand, to a connection point (7) between the capacitor (Ca) and the said inverting input and, on the other hand, to the output (8) of the differential amplifier (5).

2. Photosensitive detector according to Claim 1, for the detection of luminous flashes (2) lying within a specified frequency band,
**characterized in that** the photoelectric sensitivity of the said photosensitive diode (3) is optimized over the said frequency band.

3. Photosensitive detector according to either of Claims 1 and 2,
**characterized in that** it includes a means of binarization (9) making it possible to determine a binary state of the said photosensitive detector (1), as a function of the signal formed by the said means (4) of processing electrical signals.

4. Photosensitive detector according to Claim 3,
**characterized in that** it includes a means of storage (11) making it possible to record the said specified binary state.

5. Mosaic of photosensitive detectors,
**characterized in that** it includes a plurality of photosensitive detectors (1) such as those specified in any of Claims 1 to 4, which are arranged in rows (L1 to L5) and columns (C1 to C4) in matrix form.

6. Mosaic of photosensitive detectors according to Claim 5,
**characterized in that** it includes a monitoring system (16) making it possible to detect a characteristic variation in illumination, which is greater than a predefined variation, of at least one of the said photosensitive detectors (1).

7. Mosaic of photosensitive detectors according to Claim 6,
**characterized in that** the said monitoring system monitors the electrical current consumed by each of the said photosensitive detectors (1), any increase in the said consumed electrical current, which is greater than a predefined increase, indicating a characteristic variation in illumination.

8. Mosaic of photosensitive detectors according to Claim 6, including photosensitive detectors specified in either of Claims 3 and 4,
**characterized in that** the said monitoring system (16) monitors the binary state of the said photosensitive detectors (1), any change of the binary state to a state representative of the detection of a luminous flash (2) indicating a characteristic variation in illumination.

9. Mosaic of photosensitive detectors according to Claim 8,
**characterized in that** the said monitoring system (16) includes a first network (18) of shift registers, capable of transmitting the binary state of all the photosensitive detectors (1) of the said mosaic of photosensitive detectors (15).

10. Mosaic of photosensitive detectors according to any of Claims 6 to 9, for identifying a luminous source (41) emitting luminous flashes (2) at constant and predefined time intervals (T),
**characterized in that** it includes an identification system (27) which:
- measures the time interval between two successive detected characteristic variations in illumination;
- compares the time interval thus measured with the predefined time interval (T) of emission of the said luminous source (41); and
- identifies as appropriate, on the basis of this comparison, the said luminous source (41).

11. Mosaic of photosensitive detectors according to any of Claims 5 to 10,
**characterized in that** it includes a locating system (17) making it possible to locate in the matrix of the mosaic of photosensitive detectors (15) the position of each photosensitive detector (1) which detects a luminous flash (2).

12. Mosaic of photosensitive detectors according to Claim 11,
**characterized in that** the said locating system (17) includes a second network (29) of shift registers, making it possible to transmit in series in a predefined order the binary state of all the photosensitive detectors (1), the order of each photosensitive detector (1) in the transmission series being representative of its position in the matrix.

13. Mosaic of photosensitive detectors according to either of Claims 11 and 12,
**characterized in that** the said locating system (17) includes a means of calculation (35) making it possible to determine a central position from the located positions of all the photosensitive detectors (1) having detected a luminous flash (2).

14. Mosaic of photosensitive detectors according to either of Claims 11 and 12,
**characterized in that** the said locating system (17, 37):
- determines the intensity of the signal generated by the means of processing (4) of each of the photosensitive detectors (1) having detected a luminous flash (2);
- determines, in the matrix of the mosaic of photosensitive detectors (15), the position of each of the said photosensitive detectors (1) having detected a luminous flash (2); and
- calculates, from the intensities and positions thus determined, the corresponding barycentre which represents the sought-after location.

15. Device for detecting luminous flashes,
**characterized in that** it includes a detection assembly (15, 42) formed of a mosaic of photosensitive detectors (15) such as that specified in any one of Claims 5 to 14 and of a means of focusing (42) which focuses all the luminous radiation lying within its field of view (CV) onto the said mosaic of photosensitive detectors (15).

16. Device according to Claim 15,
**characterized in that** it includes a plurality of detection assemblies (15, 42) which are arranged side by side in a circle, so that the union of their fields of view (CV) allows detection of luminous flashes (2), horizontally in all directions.

17. Device according to Claim 16,
**characterized in that** it includes six detection assemblies (15, 42) arranged in hexagon form.

18. Homing head for a flying body, intended to guide the said flying body towards a luminous source and including, in particular:
- a luminous source locating system;
- a source of inertial information; and
- an information processing unit,
**characterized in that** the said luminous source locating system includes a mosaic of photosensitive detectors (15) such as that specified under any one of Claims 11 to 14 and arranged fixedly on the said flying body, in order to locate a luminous source emitting luminous flashes (2).
